# EUROPEAN PATENT APPLICATION

(11) **EP 4 459 207 A1**
(43) Date of publication of application: **06.11.2024**
(21) Application number: 22914965.3
(22) Date of filing: 28.12.2022
(51) Int. Cl.: F25D 11/02, F25D 23/12, F25D 17/06, A23B 4/015

(54) **ELECTROMAGNETIC FRESH-KEEPING STRUCTURE AND REFRIGERATOR**

(30) Priority: 28.12.2021 CN 202111629628
(71) Applicant: TCL Home Appliances (Hefei) Co., Ltd., Hefei, Anhui 230601 (CN)
(72) Inventor: BAI, Ying, Hefei, Anhui 230601 (CN); LI, Shanshan, Hefei, Anhui 230601 (CN); WANG, Haijuan, Hefei, Anhui 230601 (CN)
(74) Representative: Herrero & Asociados, S.L.
(86) International application number: PCT/CN2022/142984
(87) International publication number: WO 2023/125714

(57) **Abstract**

Provided are an electromagnetic fresh-keeping structure (2) and a refrigerator (1). The electromagnetic fresh-keeping structure comprises: a first housing (20), comprising a first accommodating space (210); and a second housing (40) provided in the first accommodating space (210) and used for partitioning the first accommodating space (210) into a plurality of sub-accommodating spaces (211). The plurality of sub-accommodating spaces (211) comprise a first sub-accommodating space (2111) and a second sub-accommodating space (2113). The second housing (40) comprises a first side wall (410), and the first sub-accommodating space (2111) and the second sub-accommodating space (2113) are respectively located on two opposite sides of the first side wall (410). The first sub-accommodating space (2111) is used for storing articles. The electromagnetic fresh-keeping structure also comprises at least one electromagnetic coil assembly (60). The electromagnetic coil assembly (60) is disposed in the second sub-accommodating space (2113). The first housing (20) is provided with a first air vent (201) and a second air vent (202). The first air vent (201) and the second air vent (202) are located on the same side of the first accommodating space (210). The first air vent (201) is in communication with the second sub-accommodating space (2113), and the second air vent (202) is in communication with the first sub-accommodating space (2111). The first side wall (410) is provided with a plurality of through holes (403). In this way, uniform heat dissipation of the electromagnetic coil assembly (60) and the stored articles can be achieved.

## Description

This application claims the priority of the Chinese patent application No. 202111629628.4, filed on December 28, 2021, titled "ELECTROMAGNETIC FRESH-KEEPING STRUCTURE AND REFRIGERATOR", the content of which is incorporated into the present application by reference in its entirety.

### TECHNICAL FIELD

The present application relates to the field of household electrical appliance technology, and more particularly, to an electromagnetic preservation structure and a refrigerator.

### BACKGROUND ART

Traditional refrigerators use low temperatures to inhibit enzyme activity, thereby preserving fruits, vegetables, meat, and other foods. In related electromagnetic preservation technologies, an electromagnetic coil assembly is disposed in the refrigerator, and the electromagnetic coil assembly is energized to generate a magnetic field. Under an action of the magnetic field, water molecules in the food are activated, and an activity of various metabolic enzymes in the food and bacteria is reduced, thereby inhibiting or slowing down spoilage of the food and achieving food preservation.

Related studies have shown that excessive magnetic field intensity may affect a lipid structure of a cell membrane, increase cell membrane permeability, and cause extravasation of intracellular substances, leading to cell apoptosis. Therefore, in electromagnetic preservation technology, the magnetic field intensity needs to be controlled within a certain magnetic field intensity range.

### SUMMARY OF INVENTION

### Technical problem

When a magnetic field with a certain magnetic field strength is applied around a fresh-keeping compartment, an electromagnetic coil assembly will dissipate heat, causing a temperature of the compartment to rise, which is not conducive to reducing activity of the enzyme, and thus causing food in the compartment to spoil quickly. If the temperature is lowered by directly introducing cold air into the compartment, a temperature of an area where the cold air flows through the compartment will be low, and a temperature of an area where the cold air does not flow through the compartment will be high. The food in the high temperature area will easily spoil quickly because the enzyme activity cannot be inhibited.

### Problem solution

### Technical solution

Embodiments of the present application provide an electromagnetic preservation structure and a refrigerator. Cold air is introduced from a first air outlet into a second sub-accommodation space provided with an electromagnetic coil assembly, and then enters a first sub-accommodation space where items are stored through a plurality of through holes, and then is guided out from a second air outlet provided on the same side as the first air outlet, thereby achieving uniform heat dissipation of the electromagnetic coil assembly and the stored items, so that the temperature distribution of the electromagnetic coil assembly and the stored items is uniform.

An embodiment of the present application provides an electromagnetic preservation structure, including a first housing, a second housing, and at least one electromagnetic coil assembly.

The first housing includes a first accommodation space.

The second housing is disposed in the first accommodation space to divide the first accommodation space into a plurality of sub-accommodation spaces. The plurality of sub-accommodation spaces include a first sub-accommodation space and a second sub-accommodation space. The second housing includes a first side wall, and the first sub-accommodation space and the second sub-accommodation space are respectively disposed on opposite sides of the first side wall. The first sub-accommodation space is configured to store items.

The electromagnetic coil assembly is disposed in the second sub-accommodation space, and when the electromagnetic coil is powered on, a radiation range of a magnetic field generated by the electromagnetic coil covers all or part of the first sub-accommodation space.

The first housing is provided with a first air outlet and a second air outlet, and the first air outlet and the second air outlet are disposed on a same side of the first accommodation space. The first air outlet is connected to the second sub-accommodation space, and the second air outlet is connected to the first sub-accommodation space; the first side wall is provided with a plurality of through holes. When cold air is introduced into the first air outlet, the cold air enters the second sub-accommodation space for heat exchange with the electromagnetic coil assembly, the cold air enters the first sub-accommodation space from the second sub-accommodation space through the through holes for heat exchange with the items, and the cold air is discharged from the second air outlet after heat exchange.

An embodiment of the present application also provides a refrigerator, including a refrigerator compartment and an electromagnetic preservation structure.

The refrigerator compartment includes a second accommodation space. A wind shielding plate is disposed in the second accommodation space, the wind shielding plate is configured to divide the second accommodation space into a sixth sub-accommodation space and a seventh sub-accommodation space. The sixth sub-accommodation space is provided with an evaporator assembly to cool air flowing in the sixth sub-accommodation space to form cold air.

The electromagnetic preservation structure is disposed in the seventh sub-accommodation space.

The wind shielding plate is provided with a fifth air outlet and a sixth air outlet, the fifth air outlet is connected to the first air outlet to guide the cold air in the sixth sub-accommodation space to the seventh sub-accommodation space. The sixth air outlet is configured to introduce the air discharged from the second air outlet into the sixth sub-accommodation space.

### Beneficial effects of invention

### Beneficial effects

In the embodiments of the present application, the cold air is introduced into the second sub-accommodation space provided with the electromagnetic coil assembly through the first air outlet, and then enters the first sub-accommodation space where items are stored through the plurality of through holes, and then is guided out from the second air outlet provided on the same side as the first air outlet, so that the cold air forms a uniformly distributed cold air flow in the second sub-accommodation space and the first sub-accommodation space, and then each part of the electromagnetic coil assembly and each part of the stored items can contact the cold air flow for heat exchange, and the cold air flow absorbs heat through heat exchange and finally takes away the heat. Thus, uniform heat dissipation of the electromagnetic coil assembly and the stored items is achieved, and the temperature distribution of the electromagnetic coil assembly and the stored items is also uniform, thereby preventing the stored items from spoiling due to uneven heat dissipation and uneven temperature distribution.

### Brief description of drawings

### DESCRIPTION OF DRAWINGS

In order to more clearly illustrate the technical solutions in the embodiments of the present application, the following drawings that will be described in the embodiments are briefly introduced. It is obvious that the drawings described below are merely some embodiments of the present application, those skilled in the art can obtain other drawings according to these drawings without creative efforts.
FIG. 1 is a schematic diagram of a refrigerator in an embodiment of the present application.
FIG. 2 is a schematic diagram a refrigerator compartment and an electromagnetic preservation structure in the refrigerator shown in FIG. 1.
FIG. 3 is an exploded view of FIG. 2.
FIG. 4 is a first diagram of the electromagnetic preservation structure in FIG. 3.
FIG. 5 is a second diagram of the electromagnetic preservation structure in FIG. 3.
FIG. 6 is an exploded view of the electromagnetic preservation structure in FIG. 3.
FIG. 7 is a third diagram of the electromagnetic preservation structure in FIG. 3.
FIG. 8 is a schematic diagram of the electromagnetic preservation structure in FIG. 3 after removing an electromagnetic coil assembly.
FIG. 9 is a cross-sectional view of FIG. 8 along a P1-P1 direction.
FIG. 10 is a cross-sectional view of FIG. 8 along a P2-P2 direction.
FIG. 11 is a cross-sectional view of FIG. 8 along a P3-P3 direction.
FIG. 12 is a schematic diagram of the electromagnetic preservation structure in FIG. 3 after removing a first housing.
FIG. 13 is a front view of FIG. 2.
FIG. 14 is a cross-sectional view of FIG. 13 along a P4-P4 direction.

### Embodiments of invention

### DETAILED DESCRIPTION OF EMBODIMENTS

The technical solutions in the embodiments of the present application will be clearly and completely described below with reference to the accompanying drawings in the embodiments of the present application. Obviously, the described embodiments are only a part of the embodiments of the present application, but not all of the embodiments. Based on the embodiments in this application, all other embodiments obtained by those skilled in the art without creative efforts fall within the scope of protection of this application.

The technical solutions in the embodiments of the present application will be clearly and completely described below with reference to the accompanying drawings in the embodiments of the present application. Obviously, the described embodiments are only a part of the embodiments of the present application, but not all of the embodiments. Based on the embodiments in this application, all other embodiments obtained by those skilled in the art without creative efforts fall within the scope of protection of this application.

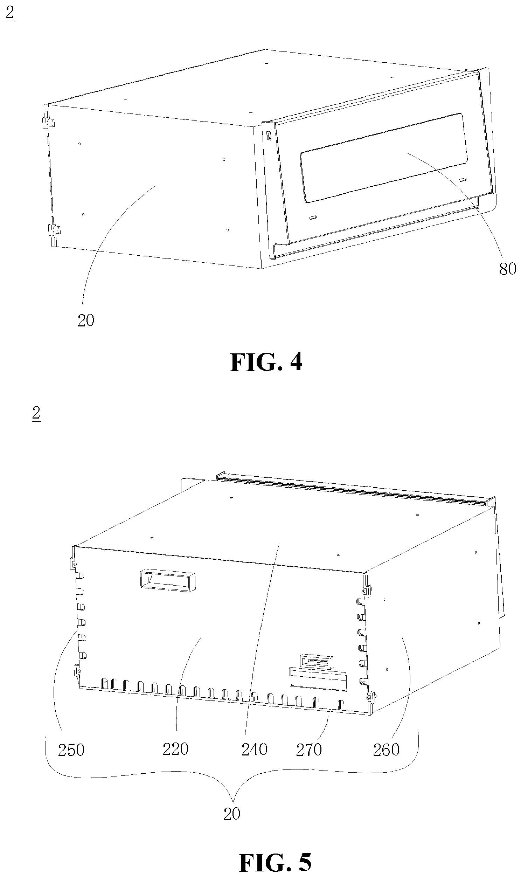

Referring to FIG. 4 to FIG. 6, an electromagnetic preservation structure 2 includes a first housing 20, a second housing 40, and at least one electromagnetic coil assembly 60.

Referring to FIG. 4 to FIG. 6, the first housing 20 includes a first accommodation space 210.

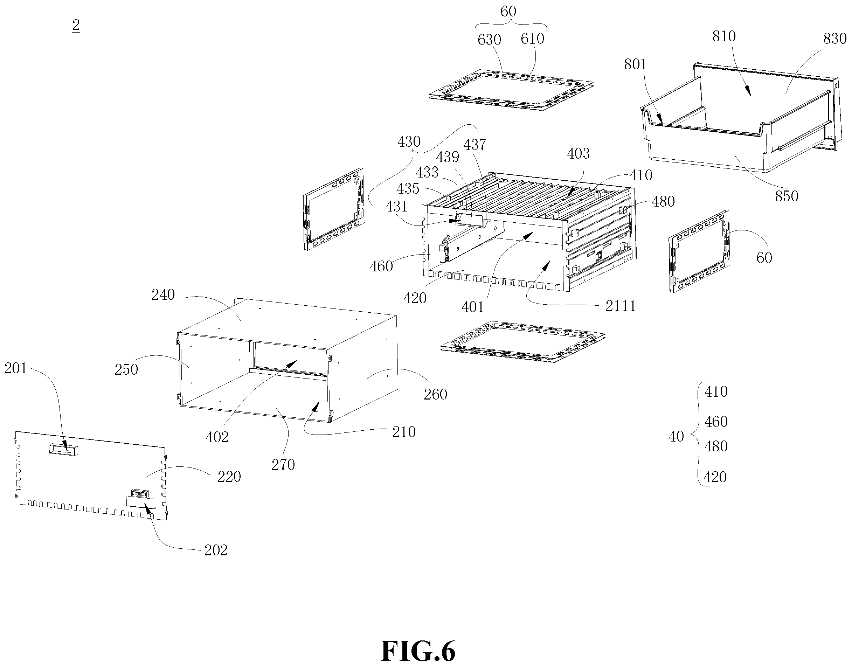

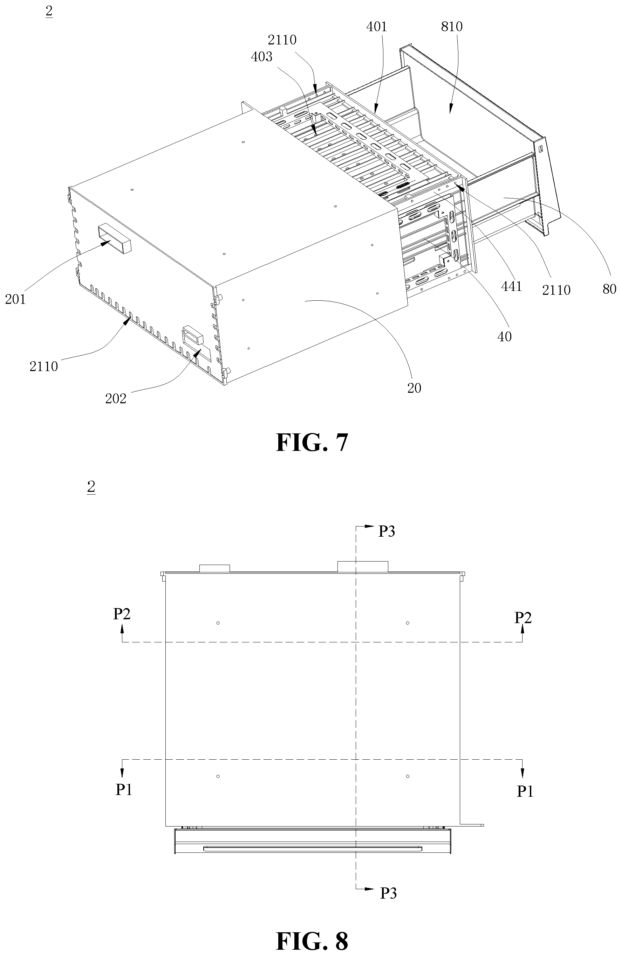

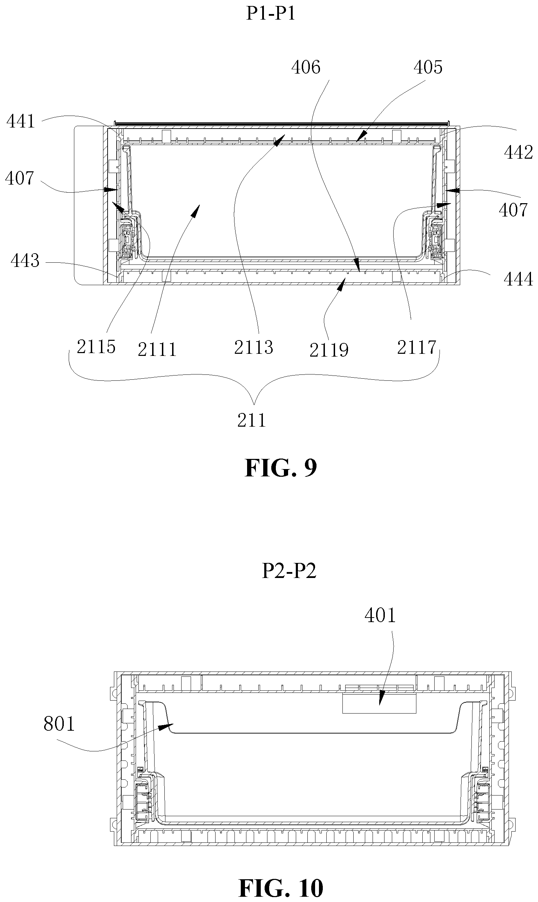

Referring to FIG. 6 and FIG. 7 to FIG. 9, the second housing 40 is disposed in the first accommodation space 210 to divide the first accommodation space 210 into a plurality of sub-accommodation spaces 211. The plurality of sub-accommodation spaces 211 include a first sub-accommodation space 2111 and a second sub-accommodation space 2113. Referring to FIG. 6 and FIG. 7, the second housing 40 includes a first side wall 410. Referring to FIG. 6 and FIG. 9, the first sub-accommodation space 2111 and the second sub-accommodation space 2113 are respectively disposed on opposite sides of the first side wall 410. The first sub-accommodation space 2111 is configured to store items. It is understood that the items may be foodstuffs that need to be stored at low temperatures, including ingredients or foods. The ingredients may include fruits, vegetables, and meat. The foods may include cooked foods. The items may also be medicines or other items other than the foodstuffs that need to be stored at low temperatures. Low temperature storage may include refrigerated storage and frozen storage.

Referring to FIG. 6, the electromagnetic coil assembly 60 includes an electromagnetic coil 610. Referring to FIG. 7 and FIG. 9, the electromagnetic coil assembly 60 is disposed in the second sub-accommodation space 2113. When the electromagnetic coil 610 is powered on, a radiation range of a magnetic field generated by the electromagnetic coil 610 covers all or part of the first sub-accommodation space 2111.

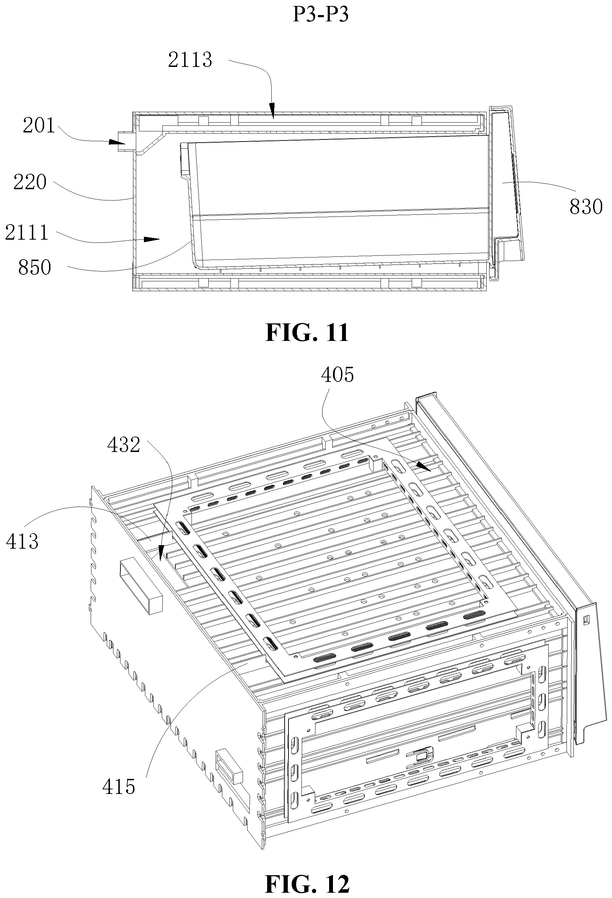

It can be understood that, referring to FIG. 5 and FIG. 6, the first housing 20 is provided with a first air outlet 201 and a second air outlet 202. The first air outlet 201 and the second air outlet 202 are disposed on the same side of the first accommodation space 210. Referring to FIG. 10 and FIG. 11, the first air outlet 201 is connected with the second sub-accommodation space 2113. Referring to FIG. 7, FIG. 10 and FIG. 11, the second air outlet 202 is connected with the first sub-accommodation space 2111. Referring to FIG. 6 and FIG. 7, the first side wall 410 is provided with a plurality of through holes 403.

It can be understood that, referring to FIG. 5 to FIG. 7 and FIG. 11, when cold air is introduced into the first air outlet 201, the cold air enters the second sub-accommodation space 2113 for heat exchange with the electromagnetic coil assembly 60, the cold air enters the first sub-accommodation space 2111 from the second sub-accommodation space 2113 through the through holes 403 for heat exchange with the items, and the cold air is discharged from the second air outlet 202 after heat exchange.

It can be understood that in the embodiments of the present application, cold air is introduced from the first air outlet 201 into the second sub-accommodation space 2113 in which the electromagnetic coil assembly 60 is provided, enters the first sub-accommodation space 2111 in which the items are stored through the plurality of through holes 403, and is then discharged from the second air outlet 202 arranged on the same side as the first air outlet 201, so that the cold air forms a uniformly distributed cold air flow in the second sub-accommodation space 2113 and the first sub-accommodation space 2111. Therefore, each part of the electromagnetic coil assembly 60 and each part of the stored items can be in contact with the cold air flow for heat exchange, and the cold air flow absorbs heat through heat exchange and finally takes away the heat, thereby achieving uniform heat dissipation of the electromagnetic coil assembly 60 and the stored items, so that the temperature distribution of the electromagnetic coil assembly 60 and the stored items is uniform. This prevents the stored items from spoiling due to uneven heat dissipation and uneven temperature distribution.

Referring to FIG. 6 and FIG. 7, the electromagnetic preservation structure 2 further includes a box body 80. The box body 80 is provided with an open chamber 810, and the open chamber 810 is configured to accommodate items.

Referring to FIG. 6 and FIG. 7, the second housing 40 includes a first opening 401. The first opening 401 is connected to the first sub-accommodation space 2111. The box body 80 can be inserted into the first sub-accommodation space 2111 through the first opening 401 and can be withdrawn from the first sub-accommodation space 2111 through the first opening 401. The plurality of through holes 403 are dispersedly arranged on the first side wall 410. Openings of the plurality of through holes 403 are arranged opposite to an opening of the open chamber 810. The open chamber 810 is connected to the first sub-accommodation space 2111 and the second air outlet 202. The cold air can flow into the open chamber 810 through the plurality of through holes 403 and then be discharged from the second air outlet 202 after heat exchange with the items.

Referring to FIG. 5 and FIG. 6. The first housing 20 includes a back plate 220. The first housing 20 also includes a first side plate 240, a second side plate 250, a third side plate 260, and a fourth side plate 270 arranged on the same side of the back plate 220. The back plate 220, the first side plate 240, the second side plate 250, the third side plate 260, and the fourth side plate 270 surround to form the first accommodation space 210. At one end away from the back plate 220, the first side plate 240, the second side plate 250, and the third side plate 260 surround and form a second opening 402. The second housing 40 can be inserted into the first accommodation space 210 through the second opening 402. The back plate 220 is provided with the first air outlet 201 and the second air outlet 202.

Referring to FIG. 6, FIG. 11 and FIG. 12, the second housing 40 includes an air duct structure 430. The air duct structure 430 includes a first air duct opening 431 and a second air duct opening 432. The air duct structure 430 is disposed on a side of the first side wall 410 facing away from the first sub-accommodation space 2111. An opening of the first air duct opening 431 faces the back plate 220 and is connected to the back plate 220. A projection area of the first air outlet 201 on the back plate 220 is located within a range of a projection area of the first air duct opening 431 on the back plate 220. An opening of the second air duct opening 432 is connected to the first sub-accommodation space 2111.

It can be understood that, referring to FIG. 6, FIG. 11, and FIG. 12, the second housing 40 includes a first baffle wall 433. The first baffle wall 433 is disposed on a side of the first side wall 410 facing away from the first sub-accommodation space 2111, and the first baffle wall 433 is disposed in close contact with the back plate 220. The second housing 40 also includes a second baffle wall 435, a third baffle wall 437, and a fourth baffle wall 439, and the second baffle wall 435, the third baffle wall 437, and the fourth baffle wall 439 are disposed on a side of the first side wall 410 facing the first sub-accommodation space 2111. One ends of the first baffle wall 433, the second baffle wall 435, the third baffle wall 437, and the fourth baffle wall 439 are surrounded together to form the first air duct opening 431. The other ends of the first baffle wall 433, the second baffle wall 435, the third baffle wall 437, and the fourth baffle wall 439 are surrounded together to form the second air duct opening 432.

It can be understood that, referring to FIG. 6 and FIG. 7, the first air outlet 201 and the second air outlet 202 are spaced apart. The first air outlet 201 is disposed at an end of the back plate 220 close to the first side wall 410. The second air outlet 202 is disposed at an end of the back plate 220 away from the first side wall 410. The first air outlet 201 is disposed above the second air outlet 202, increasing a distance between the first air outlet 201 and the second air outlet 202, so that the cold air can flow more smoothly in the second sub-accommodation space 2113 and the first sub-accommodation space 2111.

Referring to FIG. 12, a first wind shielding portion 413 and a second wind shielding portion 415 are further disposed on a side of the first side wall 410 facing away from the first sub-accommodation space 2111. The first wind shielding portion 413 and the second wind shielding portion 415 are disposed on both sides of the second air duct opening 432 to guide the cold air introduced into the second air duct opening 432 to an area of the first side wall 410 where the through holes 403 are provided.

Referring to FIG. 6, FIG. 7, and FIG. 11, the box body 80 includes a first wall 830 and a second wall 850 that are arranged opposite to each other. The open chamber 810 is formed between the first wall 830 and the second wall 850. When the box body 80 is inserted into the first sub-accommodation space 2111, the first wall 830 can cover the first opening 401. The second wall 850 is disposed opposite to and spaced from the back plate 220. A notch 801 is provided at one end of the second wall 850 near the first side wall 410 to increase a flow area of the cold air flowing from an inside of the open chamber 810 to an outside of the open chamber 810, so that when the first wall 830 covers the first opening 401, the cold air can quickly flow out of the open chamber 810 after heat exchange and be guided out from the second air outlet 202.

It can be understood that, referring to FIG. 5 to FIG. 7, a side of the first housing 20 facing away from the first accommodation space 210 and a side of the first wall 830 of the box body 80 facing away from the open chamber 810 are provided with a metal layer to prevent the magnetic field from radiating out of the first accommodation space 210, thereby preventing signal interference to external components. It can be further understood that the first wall 830, the first side plate 240, the second side plate 250, and the third side plate 260 are all provided with a metal layer on their sides facing an outside of the electromagnetic preservation structure 2.

Referring to FIG. 9, the plurality of sub-accommodation spaces 211 further include a third sub-accommodation space 2115, a fourth sub-accommodation space 2117, and a fifth sub-accommodation space 2119. The fifth sub-accommodation space 2119 is disposed opposite to the second sub-accommodation space 2113. The second sub-accommodation space 2113, the third sub-accommodation space 2115, the fourth sub-accommodation space 2117, and the fifth sub-accommodation space 2119 are arranged around a periphery of the first sub-accommodation space 2111 and are connected. Referring to FIG. 6 and FIG. 7, each of the third sub-accommodation space 2115, the fourth sub-accommodation space 2117, and the fifth sub-accommodation space 2119 includes at least one ventilation hole 2110 on the side away from the first opening 401. After the cold air is introduced into the second sub-accommodation space 2113 through the first air outlet 201, a part of the cold air flows into the first sub-accommodation space 2111 through the through hole 403, and is discharged from the second air outlet 202 after heat exchange, and another part of the cold air flows into the third sub-accommodation space 2115, the fourth sub-accommodation space 2117 and the fifth sub-accommodation space 2119, and is discharged from the ventilation holes 2110 after heat exchange.

It can be understood that, referring to FIG. 6 and FIG. 9, the first side wall 410 and the first side plate 240 surround to form the second sub-accommodation space 2113. The second side wall 460 and the second side plate 250 surround to form the third sub-accommodation space 2115. The third side wall 480 and the third side plate 260 surround to form the fourth sub-accommodation space 2117. The fourth side wall 420 and the fourth side plate 270 surround to form the fifth sub-accommodation space 2119.

Referring to FIG. 9, the second housing 40 also includes a first baffle 441, a second baffle 442, a third baffle 443 and a fourth baffle 444, which are configured to divide an accommodation space other than the first sub-accommodation space 2111 in the first accommodation space 210 into the second sub-accommodation space 2113, the third sub-accommodation space 2115, the fourth sub-accommodation space 2117, and the fifth sub-accommodation space 2119.

Referring to FIG. 9, it can be understood that the second sub-accommodation space 2113 and the third sub-accommodation space 2115 are respectively disposed on opposite sides of the first baffle 441. The second sub-accommodation space 2113 and the fourth sub-accommodation space 2117 are respectively disposed on opposite sides of the second baffle 442. The third sub-accommodation space 2115 and the fifth sub-accommodation space 2119 are respectively disposed on opposite sides of the third baffle 443. The fourth sub-accommodation space 2117 and the fifth sub-accommodation space 2119 are respectively disposed on opposite sides of the fourth baffle 444.

Referring to FIG. 7 and FIG. 9, each of the first baffle 441, the second baffle 442, the third baffle 443, and the fourth baffle 444 is provided with a plurality of air guide holes 203. The plurality of air guide holes 203 are arranged near the first opening 401 to guide the cold air to pass through the air guide holes 203 near the first opening 401.

It is understood that in some embodiments, the first baffle 441, the second baffle 442, the third baffle 443, and the fourth baffle 444 are all provided with a plurality of air guide holes 203. A density of the plurality of air guide holes 203 decreases from an end close to the first opening 401 to an end away from the first opening 401, so as to guide a large amount of cold air to pass through the air guide holes 203 close to the first opening 401.

Referring to FIG. 6, FIG. 7, and FIG. 9, the fifth sub-accommodation space 2119 is provided with an electromagnetic coil assembly 60. The electromagnetic coil assembly 60 in the second sub-accommodation space 2113 and the electromagnetic coil assembly 60 in the fifth sub-accommodation space 2119 are combined to form a Helmholtz coil for forming a uniform magnetic field in the first sub-accommodation space 2111.

Referring to FIG. 6, FIG. 7, and FIG. 9, the third sub-accommodation space and the fourth sub-accommodation space 2117 are dispsoed on both sides of the second sub-accommodation space 2113 and are arranged opposite to each other. The third sub-accommodation space and the fourth sub-accommodation space 2117 are both provided with an electromagnetic coil assembly 60. The electromagnetic coil assembly 60 of the third sub-accommodation space 2115 and the electromagnetic coil assembly 60 of the fourth sub-accommodation space 2117 are combined to form a Helmholtz coil to form a uniform magnetic field in the first sub-accommodation space 2111.

Referring to FIG. 6, the electromagnetic coil assembly 60 includes a coil fixing frame and the electromagnetic coil 610. The electromagnetic coil 610 is wound around the coil fixing frame 630. The electromagnetic coil 610 is fixedly installed by installing the coil fixing frame on the first side wall 410, the second side wall 460, the third side wall 480, and the fourth side wall 420 on a side facing away from the first sub-accommodation space 2111.

Referring to FIG. 6, the second housing 40 further includes a second side wall 460, a third side wall 480, and a fourth side wall 420. The first side wall 410, the second side wall 460, the third side wall 480, and the fourth side wall 420 surround and form the first sub-accommodation space 2111.

Referring to FIG. 6 and FIG. 9, the first side wall 410, the second side wall 460, the third side wall 480, and the fourth side wall 420 surround the first housing 20 to form the second sub-accommodation space 2113, the third sub-accommodation space 2115, the fourth sub-accommodation space 2117, and the fifth sub-accommodation space 2119.

Referring to FIG. 6, FIG. 7, FIG. 9, and FIG. 12, the first side wall 410 is provided with a plurality of first air guide slots 405 arranged side by side on the side facing away from the first accommodation space 210. An extension direction of the first air guide slots 405 is consistent with a direction in which the first air outlet 201 toward the first opening 401, so that the cold air flowing into the first air guide slots 405 flows along the first air guide slots 405 in a direction away from the first air outlet 201 and enters the first sub-accommodation space 2111 through the through hole 403 during the flow. At the same time, the cold air introduced into the second sub-accommodation space 2113 but not flowing into the first air guide slots 405 exchanges heat with the electromagnetic coil assembly 60 in the second sub-accommodation space 2113, and then flows into the third sub-accommodation space 2115, the fourth sub-accommodation space 2117, and the fifth sub-accommodation space 2119 to continue heat exchange, and finally is discharged from the ventilation holes 2110.

Referring to FIG. 6, FIG. 7, FIG. 9, and FIG. 12, a plurality of second air guide slots 406 arranged side by side are provided on the side of the fourth side wall 420 facing away from the first sub-accommodation space 2111. The second air guide slots 406 correspond to the ventilation holes 2110 one by one. One end of the second air guide slot 406 is connected to the corresponding ventilation hole 2110, so as to guide the cold air flowing into the second air guide slot 406 to the corresponding ventilation hole 2110, so that the cold air exchanges heat with the fourth side wall 420 and the electromagnetic coil assembly 60 in the fifth sub-accommodation space 2119 while flowing along the second air guide slot 406. It can be understood that the cold air flows along the second air guide slot 406, thereby increasing a heat exchange area. At the same time, the cold air is guided to flow out of the slot along the second air guide slot 406 to take away the heat, thereby further enhancing the effect of uniform heat dissipation.

Referring to FIG. 6, FIG. 7, FIG. 9, and FIG. 12, a plurality of third air guide slots 407 arranged side by side are provided on the side of the second side wall 460 and the third side wall 480 facing away from the first sub-accommodation space 2111. The third air guide slots 407 correspond to the ventilation holes 2110 one by one. One end of the third air guide slot 407 is connected to the corresponding ventilation hole 2110 to guide the cold air flowing into the third air guide slot 407 to the corresponding ventilation hole 2110, so that the cold air exchanges heat with the second side wall 460 and the electromagnetic coil assembly 60 in the third sub-accommodation space 2115 while flowing along the third air guide slot 407 disposed in the second side wall 460. Also, the cold air exchanges heat with the third side wall 480 and the electromagnetic coil assembly 60 in the fourth sub-accommodation space 2117 while flowing along the third air guide slot 407 provided in the third side wall 480. It is understandable that the cold air flows along the third air guide slot 407, thereby increasing the heat exchange area. At the same time, the cold air is guided to flow out from the slot along the third air guide slot 407 to take away the heat, thereby further enhancing the effect of uniform heat dissipation.

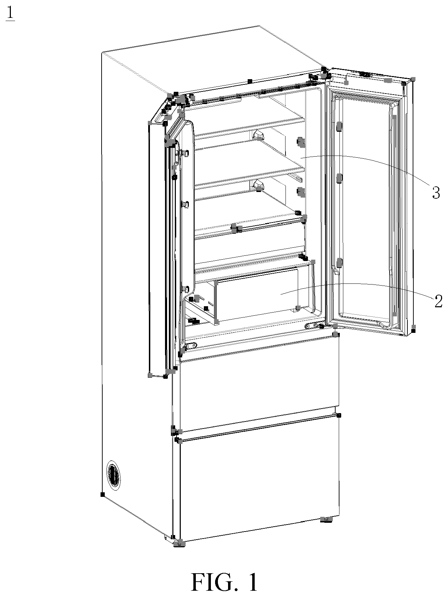

Referring to FIG. 1 to FIG. 3, a refrigerator 1 according to an embodiment of the present application includes a refrigerator compartment 3 and at least one electromagnetic preservation structure 2.

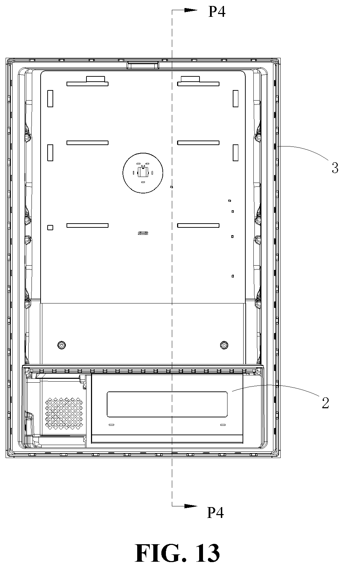

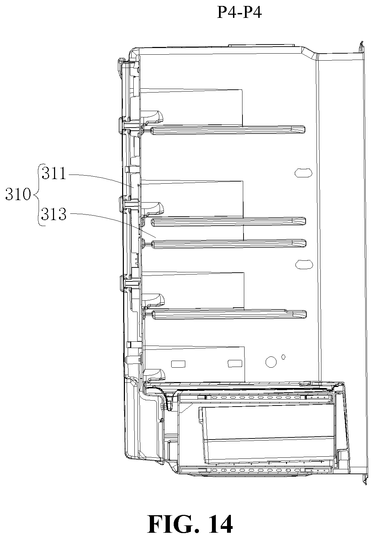

Referring to FIG. 13 and FIG. 14, the refrigerator compartment 3 includes a second accommodation space 310. A wind shielding plate 330 is provided in the second accommodation space 310. The wind shielding plate 330 is configured to divide the second accommodation space 310 into a sixth sub-accommodation space 311 and a seventh sub-accommodation space 313. The sixth sub-accommodation space 311 is provided with an evaporator assembly for cooling the air flowing in the sixth sub-accommodation space 311 to form cold air. It can be understood that FIG. 14 is only a partial structural diagram of the refrigerator compartment 3 of the refrigerator 1. Although FIG. 14 does not show the evaporator assembly in the sixth sub-accommodation space 311, it does not hinder the understanding of the structure of the present technical solutions.

Referring to FIG. 13 and FIG. 14, the electromagnetic preservation structure 2 is disposed in the seventh sub-accommodation space 313.

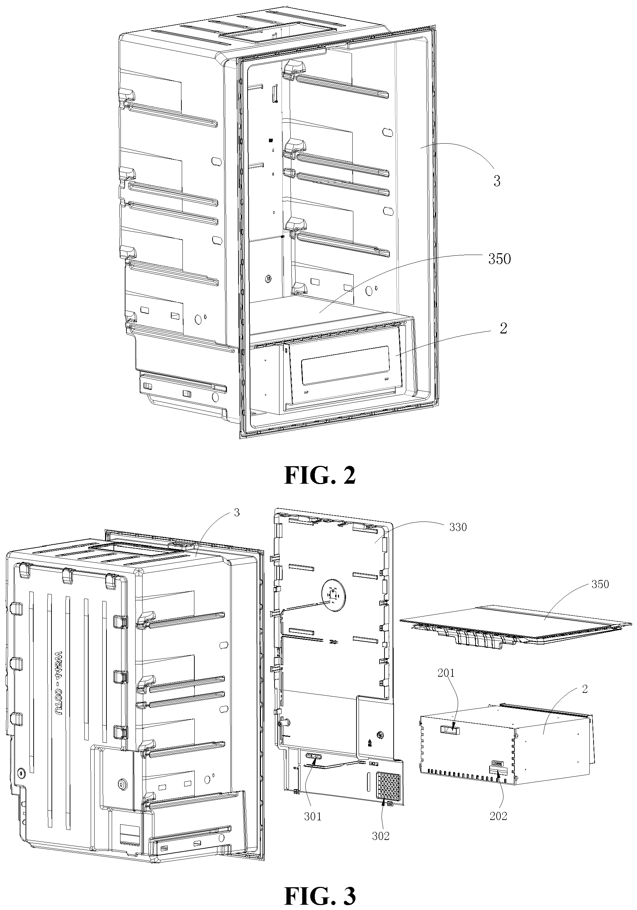

Referring to FIG. 3, the wind shielding plate 330 is provided with a third air outlet 301 and a fourth air outlet 302. The third air outlet 301 is connected to the first air outlet 201 to introduce the cold air in the sixth sub-accommodation space 311 to the seventh sub-accommodation space 313. The fourth air outlet 302 is configured to guide the air discharged from the second air outlet 202 into the sixth sub-accommodation space 311.

Referring to FIG. 2 and FIG. 3, the refrigerator 1 further includes a partition 350. The partition 350 is disposed in the refrigerator compartment 3 to separate the seventh sub-accommodation space 313 into a plurality of independent sub-accommodation spaces to increase the storage space. Different types of food can be stored separately to prevent different types of food from affecting each other, so that the food can be better preserved.

The above is a detailed introduction to an electromagnetic preservation structure and a refrigerator provided in the embodiments of the present application. This article uses specific examples to illustrate the principles and implementation methods of the present application. The description of the above embodiments is only used to help understand the method and core ideas of the present application. Further, for technicians in this field, according to the ideas of the present application, there will be changes in the specific implementation methods and application scope. In summary, the content of this specification should not be understood as a limitation on the present application.

## Claims

1. An electromagnetic preservation structure, comprising:
a first housing comprising a first accommodation space;
a second housing disposed in the first accommodation space to divide the first accommodation space into a plurality of sub-accommodation spaces, wherein the plurality of sub-accommodation spaces comprise a first sub-accommodation space and a second sub-accommodation space; the second housing comprises a first side wall, and the first sub-accommodation space and the second sub-accommodation space are respectively disposed on opposite sides of the first side wall; and the first sub-accommodation space is configured to store items; and
at least one electromagnetic coil assembly comprising an electromagnetic coil, wherein the electromagnetic coil assembly is disposed in the second sub-accommodation space, and when the electromagnetic coil is powered on, a radiation range of a magnetic field generated by the electromagnetic coil covers all or part of the first sub-accommodation space;
wherein the first housing is provided with a first air outlet and a second air outlet, and the first air outlet and the second air outlet are disposed on a same side of the first accommodation space; the first air outlet is connected to the second sub-accommodation space, and the second air outlet is connected to the first sub-accommodation space; the first side wall is provided with a plurality of through holes; when cold air is introduced into the first air outlet, the cold air enters the second sub-accommodation space for heat exchange with the electromagnetic coil assembly, the cold air enters the first sub-accommodation space from the second sub-accommodation space through the through holes for heat exchange with the items, and the cold air is discharged from the second air outlet after heat exchange.

2. The electromagnetic preservation structure according to claim 1, further comprising a box body, wherein the box body is provided with an open chamber, and the open chamber is configured to accommodate the items; the second housing comprises a first opening, and the first opening is connected to the first sub-accommodation space; the box body is inserted into the first sub-accommodation space through the first opening and is withdrawn from the first sub-accommodation space through the first opening; the plurality of through holes are dispersedly arranged on the first side wall, openings of the plurality of through holes are arranged opposite to an opening of the open chamber, the open chamber is connected to the first sub-accommodation space and the second air outlet, and the cold air flows into the open chamber through the plurality of through holes, exchanges heat with the items, and is discharged from the second air outlet.

3. The electromagnetic preservation structure according to claim 2, wherein the first housing comprises a back plate, the first housing further comprises a first side plate, a second side plate, a third side plate, and a fourth side plate arranged on a same side of the back plate, the back plate, the first side plate, the second side plate, the third side plate, and the fourth side plate surround and form the first accommodation space; the back plate is provided with the first air outlet and the second air outlet;
the second housing comprises an air duct structure, the air duct structure comprises a first air duct opening and a second air duct opening, the air duct structure is disposed on a side of the first side wall facing away from the first sub-accommodation space; an opening of the first air duct opening faces the back plate and is connected to the back plate, a projection area of the first air outlet on the back plate is located within a range of a projection area of the first air duct opening on the back plate; an opening of the second air duct opening is connected to the first sub-accommodation space.

4. The electromagnetic preservation structure according to claim 3, wherein a first wind shielding portion and a second wind shielding portion are disposed on a side of the first side wall facing away from the first sub-accommodation space, and the first wind shielding portion and the second wind shielding portion are disposed on both sides of the second air duct opening to guide cold air introduced into the second air duct opening to an area of the first side wall provided with the through holes.

5. The electromagnetic preservation structure according to claim 3, wherein the box body comprises a first wall and a second wall which are arranged opposite to each other, and the open chamber is disposed between the first wall and the second wall; when the box body is inserted into the first sub-accommodation space, the first wall covers the first opening, and the second wall is arranged opposite to and spaced from the back plate; a notch is disposed at one end of the second wall close to the first side wall to increase a flow area of the cold air flowing from an inside of the open chamber to an outside of the open chamber, so that when the first wall covers the first opening, the cold air quickly flows out of the open chamber after heat exchange and is guided out from the second air outlet.

6. The electromagnetic preservation structure according to claim 5, wherein the plurality of sub-accommodation spaces further comprise a third sub-accommodation space, a fourth sub-accommodation space, and a fifth sub-accommodation space; the fifth sub-accommodation space is disposed opposite to the second sub-accommodation space;
the second sub-accommodation space, the third sub-accommodation space, the fourth sub-accommodation space, and the fifth sub-accommodation space are arranged around a periphery of the first sub-accommodation space and are connected; the third sub-accommodation space, the fourth sub-accommodation space, and on a side away from the first opening, each of the third sub-accommodation space, the fourth sub-accommodation space and the fifth sub-accommodation space includes at least one ventilation hole, so that after the cold air is introduced into the second sub-accommodation space through the first air outlet, a part of the cold air flows into the first sub-accommodation space through the through hole, and is discharged from the second air outlet after heat exchange, and another part of the cold air flows into the third sub-accommodation space, the fourth sub-accommodation space, and the fifth sub-accommodation space, and is discharged from the ventilation holes after heat exchange.

7. The electromagnetic preservation structure according to claim 6, wherein the second housing further comprises a first baffle, a second baffle, a third baffle, and a fourth baffle, which are configured to divide an accommodation space other than the first sub-accommodation space in the first accommodation space into the second sub-accommodation space, the third sub-accommodation space, the fourth sub-accommodation space, and the fifth sub-accommodation space;
wherein the second sub-accommodation space and the third sub-accommodation space are respectively disposed on opposite sides of the first baffle; the second sub-accommodation space and the fourth sub-accommodation space are respectively disposed on opposite sides of the second baffle; the third sub-accommodation space and the fifth sub-accommodation space are respectively disposed on opposite sides of the third baffle; and the fourth sub-accommodation space and the fifth sub-accommodation space are respectively disposed on opposite sides of the fourth baffle;
the first baffle, the second baffle, the third baffle, and the fourth baffle are provided with a plurality of air guide holes, and the plurality of air guide holes are disposed close to the first opening and are configured to guide cold air to pass through the air guide holes close to the first opening.

8. The electromagnetic preservation structure according to claim 7, wherein the fifth sub-accommodation space is provided with an electromagnetic coil assembly, and the electromagnetic coil assembly disposed in the second sub-accommodation space and the electromagnetic coil assembly disposed in the fifth sub-accommodation space are combined to form a Helmholtz coil for forming a uniform magnetic field in the first sub-accommodation space.

9. The electromagnetic preservation structure according to claim 8, wherein the third sub-accommodation space and the fourth sub-accommodation space are disposed on both sides of the second sub-accommodation space and are arranged opposite to each other, the third sub-accommodation space and the fourth sub-accommodation space are both provided with an electromagnetic coil assembly, the electromagnetic coil assembly of the third sub-accommodation space and the electromagnetic coil assembly of the fourth sub-accommodation space are combined to form a Helmholtz coil for forming a uniform magnetic field in the first sub-accommodation space.

10. The electromagnetic preservation structure according to any one of claims 2 to 9, wherein the second housing further comprises a second side wall, a third side wall, and a fourth side wall; the first side wall, the second side wall, the third side wall, and the fourth side wall surround to form the first sub-accommodation space;
the first side wall, the second side wall, the third side wall, and the fourth side wall surround the first housing to form the second sub-accommodation space, the third sub-accommodation space, the fourth sub-accommodation space, and the fifth sub-accommodation space;
a plurality of first air guide slots arranged side by side are provided on a side of the first side wall facing away from the first accommodation space, an extension direction of the first air guide slot is consistent with a direction of the first air outlet toward the first opening, so that cold air flowing into the first air guide slot flows along the first air guide slot in a direction away from the first air outlet and enters the first sub-accommodation space through the through holes during a flow process; cold air introduced into the second sub-accommodation space but not flowing into the first air guide slot exchanges heat with the electromagnetic coil assembly in the second sub-accommodation space, then flows into the third sub-accommodation space, the fourth sub-accommodation space, and the fifth sub-accommodation space to continue heat exchange, and finally is discharged from the ventilation holes.

11. The electromagnetic preservation structure according to claim 10, wherein a plurality of second air guide slots arranged side by side are provided on a side of the fourth side wall facing away from the first sub-accommodation space; the second air guide slots correspond to the ventilation holes one by one, and one end of the second air guide slot is connected to the corresponding ventilation hole to guide cold air flowing into the second air guide slot to the corresponding ventilation hole, so that the cold air exchanges heat with the fourth side wall and the electromagnetic coil assembly in the fifth sub-accommodation space during flowing along the second air guide slot.

12. The electromagnetic preservation structure according to claim 11, wherein the second side wall and the third side wall are provided with a plurality of third air guide slots arranged side by side on the side facing away from the first sub-accommodation space; the third air guide slots correspond to the ventilation holes one by one, one end of the third air guide slot is connected with the corresponding ventilation hole to guide cold air flowing into the third air guide slot to the corresponding ventilation hole, so that the cold air exchanges heat with the second side wall and the electromagnetic coil assembly in the third sub-accommodation space during flowing along the third air guide slot arranged on the second side wall, and the cold air exchanges heat with the third side wall and the electromagnetic coil assembly in the fourth sub-accommodation space during flowing along the third air guide slot arranged on the third side wall.

13. A refrigerator, comprising:
a refrigerator compartment comprising a second accommodation space, wherein a wind shielding plate is disposed in the second accommodation space, the wind shielding plate is configured to divide the second accommodation space into a sixth sub-accommodation space and a seventh sub-accommodation space; the sixth sub-accommodation space is provided with an evaporator assembly to cool air flowing in the sixth sub-accommodation space to form cold air; and
at least one electromagnetic preservation structure disposed in the seventh sub-accommodation space, wherein the electromagnetic preservation structure comprising: a first housing, a second housing, and at least one electromagnetic coil assembly comprising; the first housing comprises a first accommodation space; the second housing is disposed in the first accommodation space to divide the first accommodation space into a plurality of sub-accommodation spaces, the plurality of sub-accommodation spaces comprise a first sub-accommodation space and a second sub-accommodation space; the second housing comprises a first side wall, and the first sub-accommodation space and the second sub-accommodation space are respectively disposed on opposite sides of the first side wall; and the first sub-accommodation space is configured to store items; the electromagnetic coil assembly comprises an electromagnetic coil, the electromagnetic coil assembly is disposed in the second sub-accommodation space, and when the electromagnetic coil is powered on, a radiation range of a magnetic field generated by the electromagnetic coil covers all or part of the first sub-accommodation space; wherein the first housing is provided with a first air outlet and a second air outlet, and the first air outlet and the second air outlet are disposed on a same side of the first accommodation space; the first air outlet is connected to the second sub-accommodation space, and the second air outlet is connected to the first sub-accommodation space; the first side wall is provided with a plurality of through holes; when the cold air is introduced into the first air outlet, the cold air enters the second sub-accommodation space for heat exchange with the electromagnetic coil assembly, the cold air enters the first sub-accommodation space from the second sub-accommodation space through the through holes for heat exchange with the items, and the cold air is discharged from the second air outlet after heat exchange;
wherein the wind shielding plate is provided with a third air outlet and a fourth air outlet, the third air outlet is connected to the first air outlet to guide the cold air in the sixth sub-accommodation space to the seventh sub-accommodation space; the fourth air outlet is configured to introduce the air discharged from the second air outlet into the sixth sub-accommodation space.

14. The refrigerator according to claim 13, wherein the electromagnetic preservation structure further comprises a box body, the box body is provided with an open chamber, and the open chamber is configured to accommodate the items; the second housing comprises a first opening, and the first opening is connected to the first sub-accommodation space; the box body is inserted into the first sub-accommodation space through the first opening and is withdrawn from the first sub-accommodation space through the first opening; the plurality of through holes are dispersedly arranged on the first side wall, openings of the plurality of through holes are arranged opposite to an opening of the open chamber, the open chamber is connected to the first sub-accommodation space and the second air outlet, and the cold air flows into the open chamber through the plurality of through holes, exchanges heat with the items, and is discharged from the second air outlet.

15. The refrigerator according to claim 14, wherein the first housing comprises a back plate, the first housing further comprises a first side plate, a second side plate, a third side plate, and a fourth side plate arranged on a same side of the back plate, the back plate, the first side plate, the second side plate, the third side plate, and the fourth side plate surround and form the first accommodation space; the back plate is provided with the first air outlet and the second air outlet;
the second housing comprises an air duct structure, the air duct structure comprises a first air duct opening and a second air duct opening, the air duct structure is disposed on a side of the first side wall facing away from the first sub-accommodation space; an opening of the first air duct opening faces the back plate and is connected to the back plate, a projection area of the first air outlet on the back plate is located within a range of a projection area of the first air duct opening on the back plate; an opening of the second air duct opening is connected to the first sub-accommodation space.

16. The refrigerator according to claim 15, wherein a first wind shielding portion and a second wind shielding portion are disposed on a side of the first side wall facing away from the first sub-accommodation space, and the first wind shielding portion and the second wind shielding portion are disposed on both sides of the second air duct opening to guide cold air introduced into the second air duct opening to an area of the first side wall provided with the through holes.

17. The refrigerator according to claim 15, wherein the box body comprises a first wall and a second wall which are arranged opposite to each other, and the open chamber is disposed between the first wall and the second wall; when the box body is inserted into the first sub-accommodation space, the first wall covers the first opening, and the second wall is arranged opposite to and spaced from the back plate; a notch is disposed at one end of the second wall close to the first side wall to increase a flow area of the cold air flowing from an inside of the open chamber to an outside of the open chamber, so that when the first wall covers the first opening, the cold air quickly flows out of the open chamber after heat exchange and is guided out from the second air outlet.

18. The refrigerator according to claim 17, wherein the plurality of sub-accommodation spaces further comprise a third sub-accommodation space, a fourth sub-accommodation space, and a fifth sub-accommodation space; the fifth sub-accommodation space is disposed opposite to the second sub-accommodation space;
the second sub-accommodation space, the third sub-accommodation space, the fourth sub-accommodation space, and the fifth sub-accommodation space are arranged around a periphery of the first sub-accommodation space and are connected; the third sub-accommodation space, the fourth sub-accommodation space, and on a side away from the first opening, each of the third sub-accommodation space, the fourth sub-accommodation space and the fifth sub-accommodation space includes at least one ventilation hole, so that after the cold air is introduced into the second sub-accommodation space through the first air outlet, a part of the cold air flows into the first sub-accommodation space through the through hole, and is discharged from the second air outlet after heat exchange, and another part of the cold air flows into the third sub-accommodation space, the fourth sub-accommodation space, and the fifth sub-accommodation space, and is discharged from the ventilation holes after heat exchange.

19. The refrigerator according to claim 18, wherein the second housing further comprises a first baffle, a second baffle, a third baffle, and a fourth baffle, which are configured to divide an accommodation space other than the first sub-accommodation space in the first accommodation space into the second sub-accommodation space, the third sub-accommodation space, the fourth sub-accommodation space, and the fifth sub-accommodation space;
wherein the second sub-accommodation space and the third sub-accommodation space are respectively disposed on opposite sides of the first baffle; the second sub-accommodation space and the fourth sub-accommodation space are respectively disposed on opposite sides of the second baffle; the third sub-accommodation space and the fifth sub-accommodation space are respectively disposed on opposite sides of the third baffle; and the fourth sub-accommodation space and the fifth sub-accommodation space are respectively disposed on opposite sides of the fourth baffle;
the first baffle, the second baffle, the third baffle, and the fourth baffle are provided with a plurality of air guide holes, and the plurality of air guide holes are disposed close to the first opening and are configured to guide cold air to pass through the air guide holes close to the first opening.

20. The refrigerator according to claim 19, wherein the fifth sub-accommodation space is provided with an electromagnetic coil assembly, and the electromagnetic coil assembly disposed in the second sub-accommodation space and the electromagnetic coil assembly disposed in the fifth sub-accommodation space are combined to form a Helmholtz coil for forming a uniform magnetic field in the first sub-accommodation space.
